(19) **Europäisches Patentamt**
**European Patent Office**
**Office européen des brevets**

(11) **EP 2 860 594 A1**

(12) **EUROPEAN PATENT APPLICATION**

(43) Date of publication:
**15.04.2015 Bulletin 2015/16**

(51) Int Cl.:
*G05B 11/42* (2006.01)     *G05B 17/02* (2006.01)

(21) Application number: **13188527.9**

(22) Date of filing: **14.10.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Siemens Aktiengesellschaft
80333 München (DE)**

(72) Inventors:
- **Jahanshahi, Esmaeil
  7018 Trondheim (NO)**
- **Schofield, John Bradford
  7042 Trondheim (NO)**
- **Sivalingam, Selvanathan
  7044 Trondheim (NO)**

(54)     **PID control system tuning based on relay-feedback test data**

(57)     There is described a method for tuning a PID control system for a process, the method comprising (a) obtaining relay-feedback test data for the process, the relay-feedback test data comprising data representing process input and process output during a relay-feedback test, (b) calculating, based on the relay-feedback test data, an ultimate frequency value and an ultimate gain value, (c) calculating, based on the relay-feedback test data, the calculated ultimate frequency value and the calculated ultimate gain value, a set of model parameter values corresponding to a model of the process, the set of model parameter values comprising a process steady-state gain value, a process dead-time value and at least one process time constant, and (d) calculating a set of control parameter values for the PID control system based on the calculated set of model parameter values. Further, a corresponding device, control system, computer program and computer program product are described.

## FIG 1

**Description**

Field of Invention

The present invention relates to the field of PID control system tuning, in particular to a method, device and computer program for tuning a PID control system based on relay-feedback test data.

Art Background

Tuning of PID (proportional-integral-derivative) control systems are usually based on an open-loop or a closed-loop step test. However, as some processes do not allow that a step test is made at any arbitrary time, several attempts have been made at finding other ways of tuning the control systems. In this respect, relay-feedback tests have been considered, as these do not cause the process to drift too far away from its set-point.

Several rules exist for tuning PID controllers and PI (proportional-integral) controllers by using the ultimate values (ultimate gain and ultimate frequency) that can be obtained by conducting a relay-feedback test on the process that is to be controlled. Examples of such tuning rules include the Ziegler-Nichols tuning rules, the Tyres-Luyben tuning rules, and the Ciancone-Marlin tuning rules. However, these tuning rules suffer from the drawback that they are not robust and fast at the same time. Some of them are too aggressive and some are too slow.

There may thus be a need for an improved way of tuning a PID controller based on a relay-feedback test, in particular a way providing a better trade-off between robustness and speed than the known tuning rules.

Summary of the Invention

This need may be met by the subject matter according to the independent claims. Advantageous embodiments of the present invention are described by the dependent claims.

According to a first aspect of the invention, there is provided a method for tuning a PID control system for a process, the method comprising (a) obtaining relay-feedback test data for the process, the relay-feedback test data comprising data representing process input and process output during a relay-feedback test, (b) calculating, based on the relay-feedback test data, an ultimate frequency value and an ultimate gain value, (c) calculating, based on the relay-feedback test data, the calculated ultimate frequency value and the calculated ultimate gain value, a set of model parameter values corresponding to a model of the process, the set of model parameter values comprising a process steady-state gain value, a process dead-time value and at least one process time constant, and (d) calculating a set of control parameter values for the PID control system based on the calculated set of model parameter values.

This aspect of the invention is based on the idea that the process is modelled based on the relay-feedback test data, and that the calculated set of model parameter values is used as a basis for calculating a set of control parameter values (i.e., the proportional, integral and derivative values) for the PID control system. Thus, in comparison to known PID tuning methods, the control parameter values are not calculated directly from the ultimate values of the relay-feedback test but derived from a model of the process which is established by further processing of the relay-feedback test data. Thereby, an improved trade-off between robustness and speed can be obtained by means of a relay-feedback test. Furthermore, efficient tuning of the PID control system can be achieved in a simple way in cases where a complicated step-test is difficult or impossible to use.

In the present context, the term "tuning a PID control system" may in particular denote determining an initial or updated set of control parameter values for the PID control system.

In the present context, the term "model of the process" may in particular denote a mathematical representation of a transfer function for the process.

In the present context, the term "process steady-state gain value" may in particular denote the limiting value of the process output as time goes towards infinity when a unit step function is applied as process input.

In the present context, the term "process dead-time value" may in particular denote the time it takes from a certain change occurs at the process input until a corresponding change occurs at the process output

In the present context, the term "process time constant" may in particular denote the time it takes the process to reach 1 - 1/e (approximately 63.2%) of its asymptotic value in response to a step function at the process input.

The relay-feedback test may be performed at start-up of the control system or during operation of the control system. In both cases, a relay is placed in the feedback loop as it is known in the art and the process input and process output are recorded for a certain period of time and stored in suitable data storage.

In the present context, the step of obtaining the relay-feedback test data may include carrying out the feedback-relay test or it may merely consist in reading the relay-feedback test data from the data storage.

The various steps of calculating ultimate values, model parameter values and control parameter values may preferably be performed by one or more suitably programmed data processing units.

By calculating a set of model parameter values based on the ultimate values and the relay-feedback test data, and by using the calculated model parameter values to calculate a set of control parameter values, an efficient tuning of the PID control system can be obtained based on a simple relay-feedback test.

According to an embodiment of the invention, the calculation of the steady-state gain value comprises (a) calculating a cross power spectral density of process input and process output, (b) calculating a power spectral density of process input, and (c) calculating the steady-state gain value as a ratio between the calculated cross power spectral density of process input and process output and the calculated power spectral density of process input.

The step of calculating the cross power spectral density and power spectral density may preferably rely on Welch's averaged, modified periodogram method of spectral estimation, e.g. by using the MATLAB-function "cpsd".

Thereby, the steady-state gain value can be calculated directly from the relay-feedback test data without the need for performing other tests, such as comparing process input and process output at two different steady-states.

According to a further embodiment of the invention, the calculation of the process dead-time value comprises (a) calculating a series of cross-correlations between process input and process output where a number of different delay values are applied to the process input, and (b) identifying the delay value that results in the largest cross-correlation between process input and process output as the process dead-time value.

This embodiment is based on the observation that the correlation between process input and process output will be largest when the input is delayed with an amount of time corresponding to the process dead-time.

The step of calculating a series of cross-correlations with a number of different delays applied to the process input is preferably performed by sliding the process input relative to the process output.

By using a sufficient small step-size between the applied delays, a precise determination of the process dead-time may be obtained even under noisy conditions by processing the relay-feedback test data and without the need for performing other tests.

According to a further embodiment of the invention, the method further comprises pre-processing the process input and process output prior to calculating the series of cross-correlations between process input and process output, wherein the pre-processing comprises one or more of (a) removing relay chattering, (b) removing incomplete cycles, (c) recognition of relay response shape, (d) identification of process gain sign, and (e) reformatting the process input and process output.

Generally speaking, the pre-processing of the process input and the process output serves to improve the precision of the determination of the process dead-time value and to minimize the impact of noise.

Relay chattering, i.e. noise caused by the relay opening and closing erratically, may particularly be removed by calculating a derivative of the process input (i.e. the relay output), which provides a series of spikes or pulses for all closing and opening of the relay. More specifically, the derivative of the process input contains a positive spike for each opening of the relay and a negative spike for each closing of the relay. The rest of the time the derivative is zero. It is clear that a certain minimum amount of time has to pass after e.g. a relay opening until a relay closing takes place. Accordingly, a positive spike in the derivative cannot be followed by a negative spike within this minimum amount of time and vice versa. An exemplary value for the minimum amount of time may be a fourth of the ultimate period. The ultimate period can be directly calculated from the ultimate frequency. Preferably, the removal of relay chattering also includes separating positive and negative relay action.

By removing incomplete cycles from start and end of the relay-feedback test data, the precision of the calculated process dead-time is further improved. The removal of incomplete cycles may also rely on the above-mentioned derivative of the process input and on the assumption that the data should e.g. start with a positive spike and end with a positive spike.

It is a known fact the shape of the relay response depends on the order of the system. First-order or delay-dominant systems show sharp and "triangle-like" shapes, while higher order systems show smoother and "sinus-like" shapes. It may be useful to categorize the relay-response in two types: "triangle" and "not-triangle". The relay shape may be found by generating two reference signals with the same period as the relay response, a triangle reference signal and a rectangle reference signal. Then, the absolute value of the relay response is compared with the absolute values of the two reference signals, and a norm, which is a measure of difference between two signals, is calculated. The smaller norm determines the shape of the relay response. To remove the effect of a phase difference between the response signal and the reference signal, the two signals may be moved for one period along each other.

Knowing the sign of the process gain is useful as it will facilitate determining which process response is the result of which relay action. The sign of the process gain may be determined as follows: First it is assumed that the sign of the process gain is positive. In this case, after a rising edge of the relay-signal (positive derivative spike) the system output must change in direction of increasing. From the nature of the relay-response we know that this happens when the process output is in a lower position (lower than average). In the second case, we assume that the process has a negative gain, which means that a rising edge of the relay results in a decrease in output of the process after a while (not later than half of the ultimate period, i.e. $P_u/2$). This happens in the upper position of the process output. By determining which of the assumptions is correct, the sign of the process gain can be determined.

Reformatting the process input and process output may involve using the absolute values of the data, cutting the data into a positive and a negative part by using the sign of the process gain to find out which process response is caused by which relay action, and sticking the positive and negative parts together by taking the absolute values and arrange all data in a row.

In summary, each of the above steps of pre-processing contributes to improving the precision of the method. According to a further embodiment of the invention, the model of the process is a first order plus dead-time model and the set of model parameters comprises the process steady-state gain value, the process dead-time value and a process time constant.

The first order plus dead-time model, also referred to as a FOPDT model, represents the process transfer function as follows:

$$G(s) = \frac{K_p e^{-Ds}}{\tau s + 1}$$

In the above formula, $K_p$ denotes the process steady-state gain, D denotes the process dead-time, and $\tau$ denotes the process time constant.

The FOPDT model is a relatively simple model, which in many cases is nevertheless capable of modelling a process with high precision.

According to a further embodiment of the invention, the method further comprises calculating a first harmonic of the process gain by applying a Fourier transform to the process output, wherein the process time constant is calculated based on the calculated process steady-state gain value and the calculated first harmonic of the process gain.

The harmonics of the system may be calculated from the following formula:

$$k_{2l-1} = \frac{4h}{\omega_{osc}(2l-1)\left|\int_T y(t)\, e^{[-j(2l-1)\omega_{osc}t]}dt\right|} \quad (for\ l = 1, 2, 3 \dots)$$

Here, h denotes the amplitude of the relay output, $\omega_{osc}$ denotes the ultimate frequency, y(t) denotes the process output, and T denotes the period of the process output. To improve the precision, in particular by cancelling out noise, the integral is preferably calculated over the whole data set and then divided by the number of (complete) cycles in the data set. More specifically, the first harmonic may be calculated as:

$$k_1 = \frac{4h}{\omega_{osc}\left|\int_T y(t)\, e^{[-j\omega_{osc}t]}dt\right|}$$

The process time constant may now be calculated as:

$$\tau = \frac{\sqrt{K_p^2 k_1^2 - 1}}{\omega_{osc}}$$

Alternatively, the process time constant may be calculated by using the ultimate gain value $K_u$, that is as:

$$\tau = \frac{\sqrt{K_p^2 K_u^2 - 1}}{\omega_{osc}}$$

However, this is less precise.

According to a further embodiment of the invention, the model of the process is a second order plus dead-time model and the set of model parameters comprises the process steady-state gain value, the process dead-time value, a first process time constant, and a second process time constant.

The second order plus dead-time model, also referred to as a SOPDT model, represents the process transfer function as follows:

$$G(s) = \frac{K_p e^{-Ds}}{(\tau_1 s + 1)(\tau_2 s + 1)}$$

Similar to the above described FOPDT model, $K_p$ denotes the process steady-state gain, and D denotes the process dead-time. Furthermore, $\tau_1$ denotes the first process time constant and $\tau_2$ denotes the second process time constant.

The SOPDT model is more complex than the above discussed FOPDT model and may in particular under noisy conditions provide a better precision.

According to a further embodiment of the invention, the method further comprises calculating a first harmonic of the process gain and a third harmonic of the process gain by applying a Fourier transform to the process output, wherein the first process time constant and the second process time constant are calculated based on the calculated process steady-state gain value, the calculated first harmonic of the process gain, and the calculated second harmonic of the process gain.

The first harmonic $k_1$ may be calculated as described above in conjunction with the FOPDT model. Similarly, the third harmonic $k_3$ may be calculated from the formula:

$$k_3 = \frac{4h}{\omega_{osc} 3 \left| \int_T y(t) e^{[-j3\omega_{osc} t]} dt \right|}$$

The first and second process time constants may then be determined by solving the following two equations:

$$K_p{}^2 k_1{}^2 - (1 + \tau_1)(1 + \tau_2) = 0$$

$$K_p{}^2 k_3{}^2 - (1 + 9\tau_1)(1 + 9\tau_2) = 0$$

Numerically solving the above two equations will give two solutions for each of the process time constants. Experiments have shown that the best results are obtained when the larger solution is selected for $\tau_1$ and the smaller solution is selected for $\tau_2$.

According to a further embodiment of the invention, the step of calculating the set of control parameter values for the PID control system comprises applying an internal model control algorithm to the calculated set of model parameter values.

More specifically, Internal Model Control (IMC) is a method of control design based on the principle that perfect control can be achieved if the controller is selected to be the inverse of the process. This intuitive approach cannot usually be implemented directly, due to practical issues. In particular, most process models cannot be inverted since the inverse is not proper. In addition, some processes have dynamics which, if inverted, would lead to an unstable controller. To solve this, in IMC control the process model is separated into invertible and non-invertible parts:

$$G(s) = G^+(s)G^-(s)$$

The IMC controller is then constructed as the product of the inverse of the invertible part of the plant model and a low pass filter, with a time constant determined by the desired bandwidth of the closed loop system:

$$G_{IMC}(s) = G^+(s)^{-1} G_f(s)$$

For first order systems, a first order filter is sufficient:

$$G_f(s) = \frac{1}{\lambda s + 1}$$

The parameter lambda is the desired closed loop bandwidth. The ability to choose this parameter allows the user to adjust the closed loop response easily. This is in contrast to the heuristic tuning rules which cannot be adjusted easily by the user.

According to a second aspect of the invention, there is provided a device for tuning a PID control system for a process, the device comprising (a) means for obtaining relay-feedback test data for the process, the relay-feedback test data comprising data representing process input and process output during a relay-feedback test, and (b) a calculation unit configured for (ba) calculating, based on the relay-feedback test data, an ultimate frequency value and an ultimate gain value, (bb) calculating, based on at least one of the relay-feedback test data, the calculated ultimate frequency value and the calculated ultimate gain value, a set of model parameter values corresponding to a model of the process, the set of model parameter values comprising a process steady-state gain value, a process dead-time value and at least one process time constant, and (bc) calculating a set of control parameter values for the PID control system based on the calculated set of model parameter values.

This aspect of the invention is based on the same idea as the first aspect described above.

The means for obtaining relay-feedback test data for the process may comprise a relay and controller for actually performing the relay-feedback test and storing the resulting process input data and process output data in a suitable data storage. Alternatively, the means for obtaining the relay-feedback test data for the process may merely read the relay-feedback test data from data storage, e.g. through a network connection.

The calculation unit may in particular comprise a processor programmed to perform the calculations and memory for storing programs, results and other data.

The device according to this aspect is capable of performing the method according to the first aspect or any of the above embodiments. In other words, the device can provide an efficient tuning of a PID control system based on a simple relay-feedback test by calculating a set of model parameter values based on the ultimate values and the relay-feedback test data, and by using the calculated model parameter values to calculate a set of control parameter values.

According to a third aspect of the invention, there is provided a PID control system for a process, the system comprising a device according to the second aspect described above.

By integrating the device according to the second aspect into the PID control system, the PID control system will be able to perform tuning of the control parameter values at start up as well as during operation, e.g. in case of performance problems.

According to a fourth aspect of the invention, there is provided a computer program comprising computer executable instructions adapted to, when executed by a computer processor, perform the method according to the first aspect or any of the embodiments described above.

The fourth aspect is based on the same idea as the first aspect described above.

According to a fifth aspect of the invention, there is provided a computer program product comprising a computer readable data carrier loaded with the computer program according to the fourth aspect.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

Brief Description of the Drawing

Figure 1 shows a block diagram of a system for performing a relay-feedback test.

Figure 2 shows an example of relay-feedback test data.

Figure 3 shows a plot of a relay output and its derivative without relay chattering.

Figure 4 shows a plot of a relay output and its derivative with relay chattering.

Figure 5 illustrates a process for finding the sign of the process gain.

Figure 6 shows an example of pre-processed data for estimating process dead-time.

Detailed Description

The illustration in the drawing is schematic.

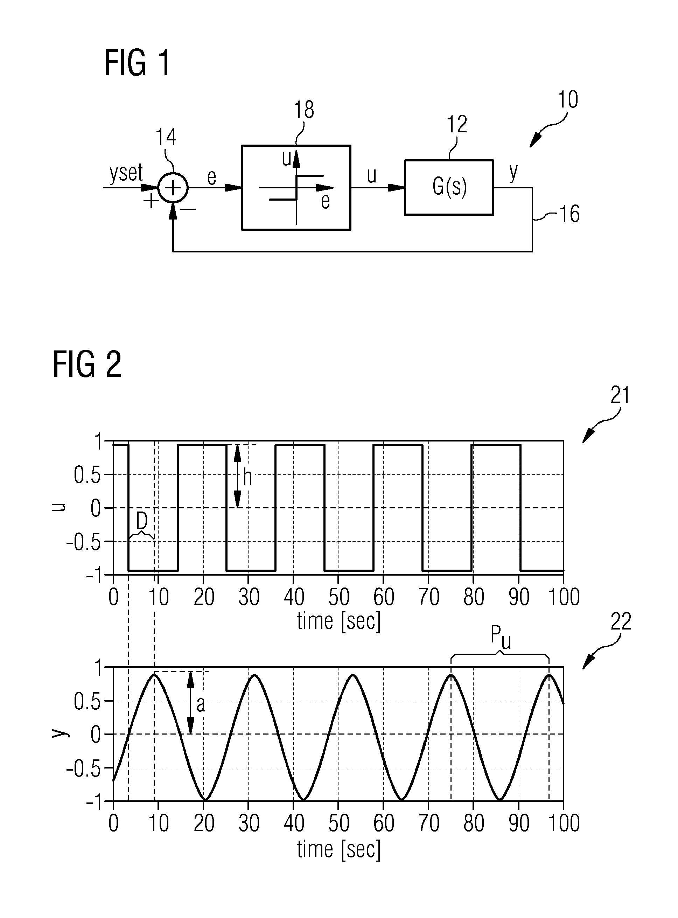

Figure 1 shows a block diagram of a system 10 for performing a relay-feedback test. The system 10 comprises a process (or plant) 12 with transfer function G(s), a subtractor 14, a feedback connection 16 and a relay 18. The controlled output y from the process 12 is fed back to the subtractor 14. The subtractor 14 also receives a set-point $y_{set}$ and generates an error signal e = $y_{set}$ - y. The error signal e is fed through the relay 18 and input to the process 12 as manipulated input signal u. The idea behind the relay-feedback system (Åström-Hägglund) is based the observation that when the output lags behind the input by n radians, the closed-loop system may oscillate with a certain period $P_u$.

Figure 2 shows an example of relay-feedback test data to illustrate how the relay-feedback system works. More specifically, Figure 2 shows a plot 21 of the manipulated process input u as a function of time and a plot 22 of the corresponding process output y as a function of time. The relay 18 of magnitude h is inserted in the feedback loop (as shown in Figure 1). Assume that the relay output is initially h and the output y is increasing. When the output reaches the set-point, the relay switches to the opposite position, u = -h. It takes a while (time-delay D) until this change at the input is sensed at the output y and the output starts to decrease.

Since the phase lag is -$\pi$, a limit cycle with a period $P_u$ results. The period of the limit cycle is the ultimate period. Therefore, the ultimate frequency from this relay feedback experiment is

$$\omega_u = \frac{2\pi}{P_u}$$

From the Fourier series expansion, the amplitude a can be considered to be the result of the primary harmonic of the relay output. Therefore, the ultimate gain can be approximated as:

$$K_u \approx \frac{4h}{\pi a}$$

where h is the height of the relay and a is the amplitude of the oscillation. However, the ultimate values may also be estimated more precisely by more sophisticated methods.

The above values of the ultimate frequency and ultimate process gain can be used to tune a PID controller, e.g. using Ziegler-Nichols-Type tuning rules. However, the present invention provides an improved tuning by analysing the relay-feedback test data further to identify a process model as will be described below.

In addition to the ultimate values, an embodiment of the present invention calculates the process steady-state gain value $K_p$ based on the cross power spectral density of manipulated input u and output y of the relay-feedback test data. More specifically, $K_p$ may be calculated as:

$$K_p = \frac{P_{uy}(0)}{P_{uu}(0)}$$

Here, $P_{uy}(0)$ is an estimate of the cross power spectral density of the discrete-time signals u and y at zero frequency, i.e. steady-state. The estimate is obtained by using Welch's averaged, modified periodogram method of spectral estimation.

The cross power spectral density is the distribution of power per unit frequency and is defined as

$$P_{xy}(\omega) = \sum_{m=-\infty}^{\infty} R_{xy}(m)\, e^{-j\omega m}$$

The cross-correlation sequence is defined as

$$R_{xy}(m) = E\{x_{n+m}y_n^*\} = E\{x_n y_{n-m}^*\}$$

where $x_n$ and $y_n$ are jointly stationary random processes, $-\infty$ n < $\infty$, and E{.} is the expected value operation.

As can be seen, the steady-state gain value can be calculated directly from the relay-feedback test data without the need for performing other tests, such as comparing process input and process output at two different steady-states.

Next, it will be described how an embodiment of the present invention calculates a good estimate of the process dead-time.

The method uses the fact that averaging will reduce the noise effect. To use this property, at least five oscillations are needed, and to obtain a good accuracy, ten oscillations are needed. It can be easily checked if the number n of data samples is enough for accurately estimating the process dead-time by determining whether n > $10F_s P_u$, where $F_s$ is the sampling frequency and $P_u$ is the ultimate period previously determined. A typical value of the sample frequency is about 10 Hz.

More specifically, the process dead-time value is calculated by calculating a series of cross-correlations between process input and process output where a number of different delays are applied to the process input, and then identifying the delay value that results in the largest cross-correlation between process input and process output as the process dead-time value.

In order to do this, it has proven advantageous to pre-process the relay-feedback test data prior to calculating the cross-correlations.

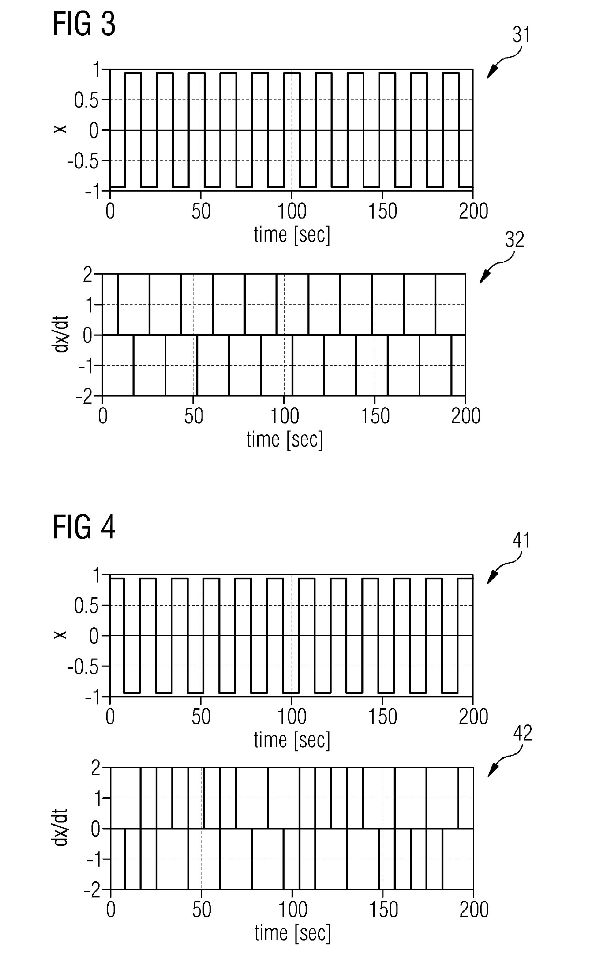

First, the derivative of the relay output (process input) is calculated. This calculation results in a series of spikes (pulses) for all closing and opening actions of the relay. That is, a positive spike for each opening and a negative spike for each closing, while at the rest of the time, the signal is zero. Figure 3 shows a plot 31 of the relay output and a plot 32 of its derivative in an ideal case without relay chattering.

However, for a noisy process, the relay sometime closes and opens erratically. Such relay chattering must be excluded from the useful process responses. Using a relay with hysteresis reduces the relay chattering. However, for a final refinement of the relay-feedback test data, a simple strategy is used.

Figure 4 shows a plot 41 of the relay output and a plot 42 of its derivative in a case with relay chattering. As can be seen, the plot 42 of the derivative contains several instances where a positive spike and a negative spike occur almost simultaneously due to relay chattering.

It is known that the relay must be activated once every $P_u/2$ sec. When the relay opens, the derivative shows a positive spike and when it closes a negative spike. The derivative cannot be positive and then negative after a short time (say shorter than $P_u/4$). The data is thus processed to separate positive and negative relay action, and also to remove relay chattering from the relay response. The latter is done by filtering the data, such that after every real activation, the relay is not allowed to act for $P_u/4$ sec.

Next, incomplete cycles are removed from start and end of the relay-feedback test data to further improve the precision of the calculated process dead-time. The removal of incomplete cycles may also rely on the above-mentioned derivative of the process input and on the assumption that the data should e.g. start with a positive spike and end with a positive spike.

Next, the relay response shape is identified. It is a known fact the shape of the relay response depends on the order of the system. First-order or delay-dominant systems show sharp and "triangle-like" shapes, while higher order systems show smoother and "sinus-like" shapes. The relay-response is categorized in two types: "triangle" and "not-triangle".

The relay shape may be found by generating two reference signals with the same period as the relay response: a triangle reference signal and a rectangle reference signal. Then, the absolute value of the relay response is compared with the absolute values of the two reference signals, and a norm, which is a measure of difference between two signals, is calculated. The smaller norm determines the shape of the relay response. To remove the effect of a phase difference between the response signal and the reference signal, the two signals may be moved for one period along each other.

Next, the sign of the process gain is identified. Knowing the sign of the process gain is useful as it will facilitate determining which process response is the result of which relay action. The sign of the process gain may be determined as follows: First it is assumed that the sign of the process gain is positive. In this case, after a rising edge of the relay-signal (positive derivative spike) the system output must change in direction of increasing. From the nature of the relay-response we know that this happens when the process output is in a lower position (lower than average). In the second case, we assume that the process has a negative gain, which means that a rising edge of the relay results in a decrease in output of the process after a while (not later than half of the ultimate period, i.e. Pu/2). This happens in the upper position of the process output. By determining which of the assumptions is correct, the sign of the process gain can be determined.

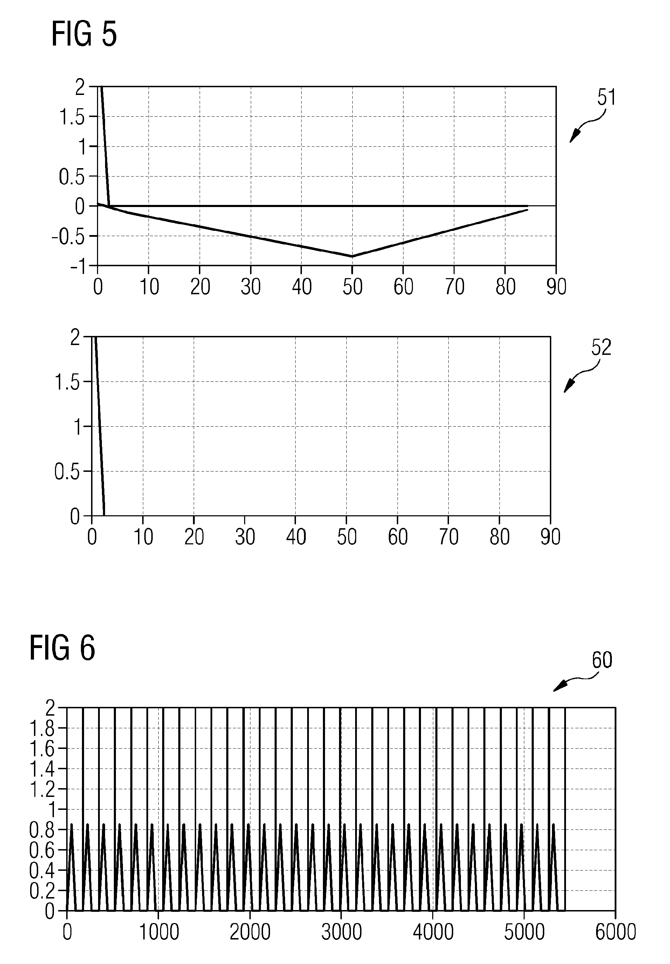

Figure 5 shows how the above can be applied to a process with positive gain. More specifically, Figure 5 shows a plot 51 of relay output signal and process output when it is assumed that the process has positive gain. Similarly, Figure 5 shows a plot 52 of relay output signal and process output when it is assumed that the process has negative gain. As can be seen in the plot 51, a system response occurs after the dead-time in the lower part of the plot 51, while there is no response in the upper part of the plot 52.

Finally, after having removed relay chattering, found the shape of the system response and identified the sign (direction) of the process gain, the data is folded, cut and stuck together in order to bring the data into a new format which is suitable for calculating the cross-correlations.

More specifically, folding denotes using absolute values of the data corresponds to folding the paper-sheet along the time-axis and putting the positive and negative data on the same side. Cutting denotes using the process gain sign information to find which response of the process output is the result of which relay action. Then, the data is cut into two parts, a positive part and a negative part. Sticking the data together denotes that instead of throwing away half of the data, the absolute values are used and all data is put in a row.

Figure 6 shows a plot 60 of the final result of folding, cutting and sticking data together for a case where the process has a positive gain with triangular shape. If the response shape is not triangular, derivative of the output signal is used.

After calculating the cross-correlations for a number of delay values, the delay value which results in the largest correlation is selected as the process dead-time value D.

Now, after having calculated estimates of the process gain $K_p$ and the process dead-time D, the process time constant can be calculated.

In case of a first order plus dead-time (FOPDT) model, i.e. a process transfer function given as

$$G(s) = \frac{K_p e^{-Ds}}{\tau s + 1}$$

the process time constant $\tau$ is calculated as:

$$\tau = \frac{\sqrt{K_p{}^2 k_1{}^2 - 1}}{\omega_{osc}}$$

where the first harmonic $k_1$ is calculated as

$$k_1 = \frac{4h}{\omega_{osc} \left| \int_T y(t) e^{[-j\omega_{osc}t]} dt \right|}$$

Here, h denotes the amplitude of the relay output, $\omega_{osc}$ denotes the ultimate frequency, y(t) denotes the process output, and T denotes the period of the process output.

In case of a second order plus dead-time (SOPDT) model, i.e. a process transfer function given as

$$G(s) = \frac{K_p e^{-Ds}}{(\tau_1 s + 1)(\tau_2 s + 1)}$$

the process time constants $\tau_1$ and $\tau_2$ are calculated by solving the two equations

$$K_p{}^2 k_1{}^2 - (1 + \tau_1)(1 + \tau_2) = 0$$

$$K_p{}^2 k_3{}^2 - (1 + 9\tau_1)(1 + 9\tau_2) = 0$$

and selecting the larger solution for $\tau_1$ and selecting the smaller solution for $\tau_2$.

Finally, the calculated model parameter values, i.e. the process gain value $K_p$, the process dead-time D and the process time constant $\tau$ or the process time constants $\tau_1$ and $\tau_2$ are used to calculate a set of PID control parameter values, i.e. proportional, integral and derivative values, by using a set of internal model control (IMC) tuning rules, such as the IMC-PID tuning rules (Rivera, Morari et al. 1986; Morari and Zafiriou 1989), which are on desired closed-loop response:

$$\frac{y}{r} = \frac{e^{-Ds}}{(\lambda s + 1)^r}$$

Where r=1 for an FODPT model and r=2 for an SOPDT model. $\lambda$ is the time-constant of the closed-loop response which is the adjustable nub for trade-off between performance and robustness. Usually $\lambda$=D is used.

The IMC-PID tuning rules are given in the below table:

| | Model | $K_c$ | $\tau_I$ | $\tau_D$ |
|---|---|---|---|---|
| FOPDT | $\dfrac{K_p e^{-Ds}}{\tau s + 1}$ | $\dfrac{\tau_I}{K_p(\lambda + D)}$ | $\tau + \dfrac{D^2}{2(\lambda + D)}$ | $\dfrac{D^2}{6(\lambda + D)}\left[3 - \dfrac{D}{\tau_I}\right]$ |
| SOPDT | $\dfrac{K_p e^{-Ds}}{\tau^2 s^2 + 2\zeta\tau s + 1}$ | $\dfrac{\tau_I}{K_p(\lambda + D)}$ | $2\tau\zeta + \dfrac{D^2}{2(\lambda + D)}$ | $\dfrac{\tau^2 - \dfrac{D^3}{6(\lambda + D)}}{\tau_I} + \dfrac{D^2}{2(\lambda + D)}$ |

Here, $K_c$, $\tau_I$, and $\tau_D$ are the PID control parameter values, i.e. the proportional gain value, the integral gain value, and the differential gain value.

It is noted that the SOPDT model in the above table is parameterized slightly different than in the previous description, such that a corresponding re-parameterization will be necessary.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

**Claims**

1. A method for tuning a PID control system for a process, the method comprising
   obtaining relay-feedback test data for the process, the relay-feedback test data comprising data representing process input and process output during a relay-feedback test,
   calculating, based on the relay-feedback test data, an ultimate frequency value and an ultimate gain value,
   calculating, based on the relay-feedback test data, the calculated ultimate frequency value and the calculated ultimate gain value, a set of model parameter values corresponding to a model of the process, the set of model parameter values comprising a process steady-state gain value, a process dead-time value and at least one process time constant, and
   calculating a set of control parameter values for the PID control system based on the calculated set of model parameter values.

2. The method according to the preceding claim, wherein the calculation of the steady-state gain value comprises
   calculating a cross power spectral density of process input and process output,
   calculating a power spectral density of process input, and

calculating the steady-state gain value as a ratio between the calculated cross power spectral density of process input and process output and the calculated power spectral density of process input.

3. The method according to any of the preceding claims, wherein the calculation of the process dead-time value comprises

calculating a series of cross-correlations between process input and process output where a number of different delay values are applied to the process input, and

identifying the delay value that results in the largest cross-correlation between process input and process output as the process dead-time value.

4. The method according to the preceding claims, further comprising pre-processing the process input and process output prior to calculating the series of cross-correlations between process input and process output, wherein the pre-processing comprises one or more of (a) removing relay chattering, (b) removing incomplete cycles, (c) recognition of relay response shape, (d) identification of process gain sign, and (e) reformatting the process input and process output.

5. The method according to any of the preceding claims, wherein the model of the process is a first order plus dead-time model and the set of model parameters comprises the process steady-state gain value, the process dead-time value and a process time constant.

6. The method according to the preceding claim, further comprising calculating a first harmonic of the process gain by applying a Fourier transform to the process output, wherein the process time constant is calculated based on the calculated process steady-state gain value and the calculated first harmonic of the process gain.

7. The method according to any of claims 1 to 4, wherein the model of the process is a second order plus dead-time model and the set of model parameters comprises the process steady-state gain value, the process dead-time value, a first process time constant, and a second process time constant.

8. The method according to the preceding claim, further comprising calculating a first harmonic of the process gain and a third harmonic of the process gain by applying a Fourier transform to the process output, wherein the first process time constant and the second process time constant are calculated based on the calculated process steady-state gain value, the calculated first harmonic of the process gain, and the calculated second harmonic of the process gain.

9. The method according to any of the preceding claims, wherein the step of calculating the set of control parameter values for the PID control system comprises applying an internal model control algorithm to the calculated set of model parameter values.

10. A device for tuning a PID control system for a process, the device comprising

means for obtaining relay-feedback test data for the process, the relay-feedback test data comprising data representing process input and process output during a relay-feedback test, and

a calculation unit configured for

calculating, based on the relay-feedback test data, an ultimate frequency value and an ultimate gain value,

calculating, based on the relay-feedback test data, the calculated ultimate frequency value and the calculated ultimate gain value, a set of model parameter values corresponding to a model of the process, the set of model parameter values comprising a process steady-state gain value, a process dead-time value and at least one process time constant, and

calculating a set of control parameter values for the PID control system based on the calculated set of model parameter values.

11. A PID control system for a process, the system comprising a device according to the preceding claim.

12. A computer program comprising computer executable instructions adapted to, when executed by a processor, perform the method according to any of claims 1 to 9.

13. A computer program product comprising a computer readable data carrier loaded with the computer program according to the preceding claim.

FIG 1

FIG 2

## FIG 3

31

32

## FIG 4

41

42

FIG 5

51

52

FIG 6

60

Europäisches
Patentamt

European
Patent Office

Office européen
des brevets

## EUROPEAN SEARCH REPORT

**Application Number**

EP 13 18 8527

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Chapter 1, 3, 4, 12:<br>In: Cheng-Ching Yu: "Autotuning of PID Controllers: A Relay Feedback Approach",<br>14 December 2006 (2006-12-14), Springer,<br>XP002721114,<br>ISBN: 978-1-84628-037-5<br>pages FP-8,23-73,245-258,<br>* page 24 - page 29 *<br>* page 62 - page 72 *<br>* page 245 - page 246 *<br>----- | 1-12 | INV.<br>G05B11/42<br>G05B17/02 |
| A | L. RABINER ET AL: "Short-time Fourier analysis tecniques for FIR system identification and power spectrum estimation",<br>IEEE TRANSACTIONS ON ACOUSTICS, SPEECH, AND SIGNAL PROCESSING,<br>vol. 27, no. 2, 1 April 1979 (1979-04-01),<br>pages 182-192, XP055105257,<br>ISSN: 0096-3518, DOI:<br>10.1109/TASSP.1979.1163218<br>* the whole document *<br>----- | 1-12 | |
| A | M. AZARIA ET AL: "Time delay estimation by generalized cross correlation methods",<br>IEEE TRANSACTIONS ON ACOUSTICS, SPEECH, AND SIGNAL PROCESSING,<br>vol. 32, no. 2, 1 April 1984 (1984-04-01),<br>pages 280-285, XP055105327,<br>ISSN: 0096-3518, DOI:<br>10.1109/TASSP.1984.1164314<br>* the whole document *<br>-----<br>-/-- | 1-12 | TECHNICAL FIELDS SEARCHED (IPC)<br><br>G05B |

The present search report has been drawn up for all claims

| Place of search | Date of completion of the search | Examiner |
|---|---|---|
| The Hague | 4 March 2014 | Bassi, Luca |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

Application Number

EP 13 18 8527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Qing-Guo Wang ET AL: "Low-Order Modeling from Relay Feedback", PROCESS DESIGN AND CONTROL, 1 January 1997 (1997-01-01), pages 375-381, XP055105258, Retrieved from the Internet: URL:http://pubs.acs.org/doi/pdfplus/10.1021/ie960412+ [retrieved on 2014-03-03] * the whole document * | 1-12 | |
| A | K SRINIVASAN ET AL: "An Improved Autotune Identification Method", CHEMICAL AND BIOCHEMICAL ENGINEERING QUARTERLY, vol. 18, no. 3, 1 March 2004 (2004-03-01), pages 249-256, XP055105413, ISSN: 0352-9568 * the whole document * | 1-12 | |

TECHNICAL FIELDS
SEARCHED        (IPC)

The present search report has been drawn up for all claims

| Place of search | Date of completion of the search | Examiner |
|---|---|---|
| The Hague | 4 March 2014 | Bassi, Luca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)